# DEMANDE DE BREVET EUROPEEN

(11) **EP 3 971 490 A1**
(43) Date de publication de la demande: **23.03.2022**
(21) Numéro de dépôt: 21197203.9
(22) Date de dépôt: 16.09.2021
(51) Int. Cl.: F24F 11/52, F24F 11/526, E06B 7/00, F24F 11/00, E06B 7/02, F24F 11/72, F24F 140/40, F24F 110/10, F24F 110/12, F24F 110/20, F24F 110/50, F24F 110/66, F24F 110/70, F24F 120/00

(54) **PROCÉDÉ ET SYSTÈME POUR CONSEILLER SUR L OPPORTUNITÉ D ACTIONNER UN OUVRANT EN VUE D AMÉLIORER LE CONFORT THERMIQUE ET/OU LA QUALITÉ DE L' AIR**

(30) Priorité: 21.09.2020 FR 2009540
(71) Demandeur: Commissariat à l'Energie Atomique et aux Energies Alternatives, 75015 Paris (FR)
(72) Inventeur: JAY, Arnaud, 38054 Grenoble cedex 09 (FR); BERNAUD, Pierre, 38054 Grenoble cedex 09 (FR); BRUN, Adrien, 38054 Grenoble cedex 09 (FR); RENZI, Virginie, 38054 Grenoble cedex 09 (FR)
(74) Mandataire: Nony

(57) **Abrégé**

Procédé et système pour conseiller sur l'opportunité d'actionner un ouvrant en vue d'améliorer le confort thermique et/ou la qualité de l'air

Procédé pour générer une préconisation d'ouverture ou de fermeture d'un ouvrant (O) permettant à un espace d'un bâtiment d'échanger avec l'extérieur, afin d'informer un occupant de cet espace sur l'opportunité d'actionner l'ouvrant en vue d'améliorer au moins son confort thermique et/ou la qualité de l'air dans ledit espace, procédé dans lequel :
- A partir de la connaissance d'au moins une condition d'ambiance intérieure dudit espace, dont la température intérieure et/ou un paramètre représentatif de la qualité de l'air dans ledit espace, on génère automatiquement une préconisation d'ouverture et/ou de fermeture de l'ouvrant par application d'au moins une règle décisionnelle prédéfinie,
on émet au moins un message visuel et/ou sonore pour informer l'occupant de ladite préconisation.

## Description

### Domaine technique

La présente invention concerne les procédés et systèmes destinés à améliorer le confort thermique d'occupation d'un espace intérieur et/ou la qualité de l'air de celui-ci.

### Technique antérieure

En France, avec les évolutions successives de la réglementation thermique, les besoins de chauffage des bâtiments récents ont fortement diminué. Les bâtiments étant plus isolés et plus étanches à l'air, deux nouvelles problématiques ont pris plus d'importance, à savoir le confort en été et la qualité de l'air intérieur.

Concernant le confort en été, un vecteur peu énergivore pour résoudre tout ou partie de ce problème est de favoriser la ventilation naturelle dans les moments opportuns. La ventilation naturelle peut notamment être activée par l'occupant en actionnant un ou plusieurs ouvrants lorsqu'il y a un potentiel de rafraîchissement.

Concernant la qualité de l'air, là aussi la ventilation naturelle peut jouer un rôle efficace via une action sur les ouvrants dans de nombreux cas.

Cependant, en période de chauffage ou de climatisation, deux effets entrent en compétition, à savoir la consommation d'énergie et la qualité de l'air. La minimisation de la consommation d'énergie pousse à réduire au maximum les échanges aérauliques entre l'intérieur et l'extérieur, échanges toutefois nécessaires pour évacuer les polluants générés à l'intérieur du bâtiment par les occupants (CO₂ notamment), le mobilier (COV), ou la cuisine par exemple.

Une problématique qui se présente ainsi à un usager soucieux d'améliorer le confort d'une pièce, d'un logement ou d'un bâtiment en général, est de savoir s'il est opportun ou non d'ouvrir ou de fermer sa fenêtre pour ne pas être contre-productif et soit réchauffer l'environnement ambiant au lieu de le refroidir, soit augmenter la consommation d'énergie, soit impacter la qualité de l'air. L'enjeu devient ainsi multi-objectif, et difficile à évaluer pour l'occupant.

En outre, la problématique est différente entre l'été et l'hiver.

L'hiver, il y a une compétition entre la qualité de l'air et la consommation énergétique : ouvrir au juste nécessaire pour améliorer la qualité de l'air sans dégrader trop la consommation énergétique.

L'enjeu l'été est d'ouvrir au moment opportun pour ne pas réchauffer le bâtiment au lieu de le rafraichir, et lorsque la climatisation est en marche, de ne pas dégrader trop la consommation énergétique.

En inter-saison, les deux problématiques peuvent se présenter durant une même journée.

La demande de brevet FR3082286 concerne un procédé permettant de piloter des ouvrants et/ou occultants d'un bâtiment, ou d'une zone d'un bâtiment, afin de permettre une ventilation naturelle en période estivale. Ce procédé vise à déterminer, en fonction de la température intérieure du bâtiment, ou de la zone du bâtiment, d'un modèle d'évolution de la température intérieure du bâtiment, ou de la zone du bâtiment, et d'un modèle d'occupation du bâtiment, ou de la zone du bâtiment, un moment optimal de fermeture des ouvrants garantissant que la température intérieure du bâtiment ou de la zone du bâtiment, soit supérieure à une température minimale lorsqu'il est occupé tout en ayant maximisé le potentiel de rafraîchissement du bâtiment ou de la zone du bâtiment.

La demande de brevet EP3339988 décrit un système de pilotage des ouvrants basé sur plusieurs informations : température d'air, taux de CO₂, humidité, luminosité, consigne de température et présence des occupants (déduite de l'évolution du taux de CO₂ et de la mesure de luminosité).

Ces deux demandes supposent la présence d'ouvrants motorisés, alors qu'une large majorité de bâtiments n'en est pas encore équipée.

La demande de brevet FR 3053769 divulgue une méthode permettant de déterminer l'état d'un ouvrant en s'appuyant sur une mesure de température d'air et de taux d'humidité. Cette demande n'apporte aucune solution vis-à-vis de la problématique énoncée plus haut.

### Exposé de l'invention

Il demeure par conséquent un besoin pour disposer d'une solution relativement simple et économique à mettre en œuvre pour permettre à un occupant d'améliorer le confort d'occupation d'un espace sur le plan thermique et/ou de la qualité de l'air, tout en optimisant la consommation énergétique le cas échéant.

### Résumé de l'invention

L'invention vise à répondre à ce besoin et elle y parvient selon un premier de ses aspects grâce à un procédé pour générer une préconisation d'ouverture ou de fermeture d'un ouvrant permettant à un espace d'un bâtiment d'échanger avec l'extérieur, afin d'informer un occupant de cet espace sur l'opportunité d'actionner l'ouvrant en vue d'améliorer au moins son confort thermique et/ou la qualité de l'air dans ledit espace, procédé dans lequel:
- A partir de la connaissance d'au moins une condition d'ambiance intérieure dudit espace, dont la température intérieure et/ou un paramètre représentatif de la qualité de l'air dans ledit espace, et le cas échéant de la connaissance en outre d'au moins une condition extérieure, on génère automatiquement une préconisation d'ouverture et/ou de fermeture de l'ouvrant par application d'au moins une règle décisionnelle prédéfinie faisant intervenir au moins ladite température intérieure et/ou ledit paramètre, et le cas échéant ladite au moins une condition extérieure,
- on émet au moins un message visuel et/ou un message sonore pour informer l'occupant de ladite préconisation, ce message étant, dans le cas d'un message visuel, émis par affichage sur une interface située sur l'ouvrant ou à proximité de celui-ci. Le message sonore peut être émis également depuis une interface située sur l'ouvrant ou à proximité.

L'invention a encore pour objet, selon un autre de ses aspects, un système pour la mise en œuvre de ce procédé, et destiné à équiper un ouvrant permettant à un espace d'un bâtiment de communiquer avec l'extérieur, ou à être placé à proximité de cet ouvrant, et visant à informer un occupant de cet espace sur l'opportunité d'actionner l'ouvrant en vue d'améliorer au moins son confort thermique et/ou la qualité de l'air dans ledit espace, le système comportant :
- des moyens de traitement,
- une interface utilisateur comportant un dispositif d'affichage et/ou un dispositif permettant d'émettre un message sonore, notamment vocal,
- l'un au moins d'un
   o capteur de température intérieure Tᵢₙₜ dudit espace et/ou un module de réception de données renseignant sur cette température intérieure,
   o capteur d'au moins un paramètre représentatif de la qualité de l'air dans ledit espace et/ou un module de réception de données renseignant sur la valeur dudit paramètre,
les moyens de traitement étant agencés pour générer une préconisation d'ouverture et/ou de fermeture de l'ouvrant en appliquant au moins une règle décisionnelle prédéfinie faisant intervenir au moins ladite température intérieure et/ou ledit paramètre, et pour informer l'occupant, via l'affichage sur l'interface et/ou l'émission d'un message sonore, de cette préconisation.

L'invention permet, à partir de la connaissance d'une ou plusieurs conditions d'ambiance intérieures, le cas échéant d'une ou plusieurs conditions d'ambiance extérieures également, de traiter l'information au travers d'un algorithme et de faire un retour de l'information auprès de l'occupant, sous la forme par exemple d'une préconisation d'ouverture ou de fermeture de l'ouvrant ou d'une information indiquant que l'ouverture de l'ouvrant sera neutre sur le plan énergétique, et le cas échéant, d'actualiser cette préconisation en fonction de la durée d'ouverture de l'ouvrant et/ou de l'évolution en temps réel de la température intérieure et/ou de la qualité de l'air intérieur.

L'invention permet ainsi d'informer l'occupant sur la pertinence et/ou la nécessité d'actionner le(s) ouvrant(s) pour améliorer son confort (thermique et/ou qualité de l'air) avec la possibilité, le cas échéant d'indiquer une estimation du temps optimal d'ouverture comme détaillé plus loin.

L'invention offre une solution efficace et élégante pour conseiller et accompagner des usagers du bâtiment, de surcroit facile à déployer, car elle ne nécessite pas de motoriser les ouvrants contrairement à l'art antérieur discuté dans l'introduction.

Par « affichage » il faut comprendre que l'information affichée est visible par une personne, soit par l'utilisation d'un afficheur, rétroéclairé ou non, alphanumérique ou non, et/ou par l'utilisation d'un ou plusieurs voyants lumineux ou électromécaniques. L'information peut encore être émise sous une forme sonore. Dans ce cas, le message sonore qui est diffusé contient de préférence la même information que celle qui est affichée ou aurait été affichée si elle avait été diffusée par voie d'affichage.

Par « équiper un ouvrant» il faut comprendre qu'au moins une partie des éléments constitutifs du système, voire la totalité, est présente sur l'ouvrant, notamment sur le vantail ou le dormant, étant par exemple rapportés sur un ouvrant existant ou intégrés dès sa fabrication dans celui-ci. Tout ou partie du système peut ainsi être intégré dans une poignée de l'ouvrant ou dans sa menuiserie. Une intégration dans la poignée est avantageuse en ce qu'elle peut permettre d'équiper facilement un ouvrant existant, en remplaçant simplement la poignée existante par une poignée équipée du système selon l'invention, tout en ayant une bonne visibilité par l'occupant de la préconisation affichée, la poignée étant l'élément vers lequel l'utilisateur porte naturellement son regard lorsqu'il veut ouvrir un ouvrant.

Par « placé à proximité de l'ouvrant » il faut comprendre qu'au moins une partie des éléments constitutifs du système, voire la totalité, est disposée à une distance inférieure ou égale à 1m de l'ouvrant, mieux inférieure ou égale à 0,75m, encore mieux inférieure ou égale à 0,5m, voire inférieure ou égale à 25cm.

L'ouvrant peut être de tout type, par exemple fenêtre, notamment à un ou deux vantaux, à vantail coulissant, pivotant ou oscillo-battant, en façade ou de toit. L'ouvrant peut également être une porte fenêtre ou une porte d'entrée.

L'ouvrant concerné peut être un ouvrant d'un logement individuel ou collectif, d'un bureau ou plus généralement de tout type de bâtiment.

Le procédé selon l'invention peut notamment présenter une ou plusieurs des caractéristiques suivantes, qui seront décrites plus précisément plus loin :
- on peut appliquer au moins deux règles décisionnelles prédéfinies en fonction de la sélection d'un mode de fonctionnement du système parmi au moins deux modes de fonctionnement, dont des modes de fonctionnement dits « été » et « hiver » ;
- on peut permettre à l'utilisateur de sélectionner manuellement le mode de fonctionnement « été » ou « hiver » ;
- la préconisation peut être générée sur la base d'au moins une règle décisionnelle faisant intervenir la température extérieure et la température intérieure ;
- ladite au moins une règle décisionnelle peut faire intervenir un hystérésis sur la ou les valeurs de seuil ou une temporisation pour l'application d'un délai avant prise en compte d'un contrordre, avant d'éviter un phénomène de changements de préconisation trop rapprochés dans le temps ;
- ladite au moins une règle décisionnelle faisant intervenir la température extérieure et la température intérieure peut comporter la comparaison de la différence des températures extérieure et intérieure, notamment en valeur absolue, à au moins un seuil prédéfini ;
- ladite au moins une règle décisionnelle faisant intervenir la température extérieure peut comporter la comparaison de la température intérieure à la température extérieure et la comparaison de la température intérieure à un seuil de température prédéfini Tₛₑᵤᵢₗ;
- la préconisation peut être générée sur la base d'au moins une règle décisionnelle faisant intervenir un paramètre représentatif de la qualité de l'air intérieur, notamment choisi parmi la teneur en CO₂, l'hygrométrie relative et la teneur en polluants organovolatiles ;
- on peut déterminer une durée préconisée d'ouverture et informer l'utilisateur de cette durée ou lorsque cette durée s'est écoulée après l'ouverture de l'ouvrant, cette ouverture étant de préférence détectée à l'aide d'un capteur d'ouverture disposé sur l'ouvrant ;
- ladite durée préconisée d'ouverture peut être générée par application d'un modèle relatif à l'évolution d'au moins une condition d'ambiance intérieure dans ledit espace, en réponse à l'ouverture de l'ouvrant, notamment l'un au moins de la température intérieure, de la teneur en CO₂, de l'humidité relative de l'air ou de la teneur en polluants organovolatiles ;
- on peut détecter la présence ou le mouvement d'une personne à proximité de l'ouvrant, et activer l'affichage de la préconisation en réponse à cette détection ;
- la préconisation peut être signalée sous une forme choisie parmi au moins trois, à savoir une première forme d'affichage (ou de contenu de message sonore diffusé) correspondant à une ouverture conseillée, une deuxième forme d'affichage (ou de contenu de message sonore diffusé) correspondant à une fermeture conseillée et une troisième forme d'affichage (ou de contenu de message sonore diffusé) correspondant à une absence de préconisation car l'ouverture n'a pas d'impact significatif positif ou négatif ou à une situation conflictuelle, mieux au moins quatre formes d'affichage (ou de contenu de message sonore diffusé), à savoir une première forme d'affichage (ou de contenu de message sonore) correspondant à une ouverture conseillée, une deuxième forme d'affichage (ou de contenu de message sonore) correspondant à une fermeture conseillée et une troisième forme d'affichage ( ou de contenu de message sonore) correspondant à une absence de préconisation car l'ouverture n'a aucun impact positif ou négatif et une quatrième forme d'affichage ( ou de contenu de message sonore) correspondant à une situation conflictuelle, notamment impact positif thermique au détriment de la qualité de l'air ou inversement; dans le cas où une situation conflictuelle est détectée, par exemple dans le cas où une préconisation d'ouverture de l'ouvrant aurait un impact négatif sur le plan thermique pour l'espace intérieur, ou une préconisation de fermeture de l'ouvrant aurait un impact négatif sur la qualité de l'air, une préconisation correspondant à une préférence utilisateur pré-renseignée peut être générée ; par exemple, l'utilisateur peut paramétrer le système pour qu'en cas de conflit, le système privilégie la qualité de l'air, et émette ainsi une préconisation d'ouverture de l'ouvrant ;
- la préconisation peut être générée par un algorithme exécuté exclusivement par un système localisé sur l'ouvrant ou à proximité ;
- la préconisation peut être générée par un algorithme exécuté au moins partiellement ailleurs que dans un système disposé sur l'ouvrant ou à proximité ;
- au moins une desdites conditions d'ambiance intérieures et/ou extérieures peut être mesurée par au moins un capteur disposé sur l'ouvrant ou à proximité ;
- au moins une desdites conditions intérieures et/ou extérieures peut être mesurée par au moins un capteur distant, non disposé sur l'ouvrant ou à proximité ;
- la préconisation peut être générée sur la base de la connaissance d'au moins une condition extérieure, notamment la température extérieure, la teneur en un polluant dans l'air extérieur, notamment en particules fines, en CO₂, en oxydes d'azote ou en ozone, ou la présence d'une pollution sonore importante ;
- toute préconisation d'ouverture peut être inhibée en cas de détection de précipitation, de vent fort, de pollution importante de l'air extérieur et/ou de pollution sonore extérieure importante.

Le système peut notamment présenter une ou plusieurs des caractéristiques suivantes, en plus de celles énoncées dans le cadre de la description du procédé :
- le système comporte un détecteur de mouvement ou de présence, et le système et/ou l'affichage sont activés automatiquement au moins une fois dans une période de temps donnée, en réponse à la détection d'une présence ou d'un mouvement ;
- l'interface comporte un feu multicolore et/ou un afficheur pour afficher un ou plusieurs pictogrammes représentant un ouvrant ouvert ou fermé ou une action de fermeture ou d'ouverture de l'ouvrant ;
- le système comporte un capteur de détection d'ouverture de l'ouvrant ;
- le système comporte un boîtier logeant l'interface utilisateur et/ou les moyens de traitement, pourvu de moyens de fixation sur l'ouvrant, notamment d'un adhésif double face et/ou de passages de vis ;
- le système comporte une partie à fixer du côté intérieur de l'ouvrant et une partie à fixer du côté extérieur, cette dernière comportant au moins un capteur de température extérieure et/ou au moins une cellule photovoltaïque ;
- le système est agencé pour remplacer la poignée de l'ouvrant ou la plaque intérieure de la poignée.

L'invention a encore pour objet un ensemble comportant un ouvrant et un système selon l'invention, fixé au moins en partie sur l'ouvrant, notamment comportant une surface adhésive collée sur l'ouvrant, ou étant au moins partiellement intégré à l'ouvrant, ou fixé à proximité.

### Autres aspects

L'invention a encore pour objet, selon un autre de ses aspects, indépendamment ou en combinaison avec ce qui précède, un système visant à informer un occupant d'un espace équipé d'au moins un ouvrant donnant sur l'extérieur, sur l'opportunité d'actionner l'ouvrant en vue d'améliorer au moins son confort thermique et/ou la qualité de l'air dans ledit espace, le système comportant :
- des moyens de traitement,
- une interface utilisateur comportant un dispositif d'affichage et/ou un dispositif permettant d'émettre un message vocal,
- au moins un capteur de température intérieure Tᵢₙₜ dudit espace et/ou un module de réception de données renseignant sur cette température intérieure,
- au moins un capteur d'au moins un paramètre représentatif de la qualité de l'air dans ledit espace et/ou un module de réception de données renseignant sur la valeur dudit paramètre,
les moyens de traitement étant agencés pour générer une préconisation d'ouverture et/ou de fermeture de l'ouvrant en appliquant une ou plusieurs règles décisionnelles prédéfinies faisant intervenir au moins ladite température intérieure et ledit paramètre, et pour informer l'occupant, via l'affichage sur l'interface et/ou l'émission d'un message vocal, de cette préconisation.

L'invention a encore pour objet, selon un autre de ses aspects, indépendamment ou en combinaison avec ce qui précède, un système visant à informer un occupant d'un espace équipé d'au moins un ouvrant donnant sur l'extérieur, sur l'opportunité d'actionner l'ouvrant en vue d'améliorer au moins son confort thermique et/ou la qualité de l'air dans ledit espace, le système comportant :
- des moyens de traitement,
- une interface utilisateur comportant un dispositif d'affichage et/ou un dispositif permettant d'émettre un message vocal,
- au moins un capteur d'au moins un paramètre représentatif de la qualité de l'air extérieur et/ou un module de réception de données renseignant sur la valeur dudit paramètre,
les moyens de traitement étant agencés pour générer une préconisation d'ouverture et/ou de fermeture de l'ouvrant en appliquant au moins une règle décisionnelle prédéfinie faisant intervenir au moins la valeur dudit paramètre, via l'affichage sur l'interface et/ou l'émission d'un message vocal, de cette préconisation.

Un tel système permet de conseiller automatiquement à l'occupant de ne pas ouvrir l'ouvrant quand la qualité de l'air extérieur est mauvaise, par exemple en raison de la teneur élevée en un polluant, par exemple la teneur en oxydes d'azote, en particules fines ou en ozone, ou quand le niveau de bruit extérieur dépasse un certain seuil.

Les systèmes selon ces autres aspects de l'invention ne sont pas nécessairement disposés sur l'ouvrant ou à proximité de celui-ci.

Ils peuvent présenter tout ou partie des caractéristiques déjà décrites en relation avec les autres objets de l'invention.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] la figure 1 est un schéma en blocs d'un exemple de système selon l'invention,
[Fig 2] la figure 2 représente de manière partielle et schématique un ouvrant équipé d'un exemple de système selon l'invention,
[Fig 3] la figure 3 illustre un exemple de variante connectée du système selon l'invention,
[Fig 4] la figure 4 est un exemple de règles décisionnelles en fonction de données d'entrée,
[Fig 5] la figure 5 est un schéma analogue à la figure 4 d'un autre exemple de mise en œuvre de l'invention,
[Fig 6] la figure 6 est un schéma analogue à la figure 4 d'un autre exemple de mise en œuvre de l'invention,
[Fig 7] la figure 7 est un schéma analogue à la figure 4 d'un autre exemple de mise en œuvre de l'invention,
[Fig 8] la figure 8 est un exemple de logigramme illustrant une variante avec préconisation de durée d'ouverture, et
[Fig 9] la figure 9 est un exemple de système selon l'invention au moins partiellement intégré à une poignée.

### Description détaillée

### Moyens de traitement

Comme mentionné plus haut, le système selon l'invention peut comporter des moyens de traitement qui reçoivent diverses données en entrée, notamment des données renseignant sur la température intérieure ou la qualité de l'air, ainsi le cas échéant que des données renseignant sur au moins une condition extérieure, et les traitent pour délivrer une information appréhendable par l'occupant indiquant s'il doit ouvrir ou fermer l'ouvrant, et le cas échéant le laisser ouvert pendant combien de temps. Cette information est affichée sur l'ouvrant concerné ou à proximité. Un message sonore correspondant peut encore être émis, ce message étant par exemple pré-enregistré sur une mémoire électronique.

L'expression « moyens de traitement » ne doit pas être comprise comme étant limitée à une implantation locale de tous les moyens techniques qui permettent d'assurer cette fonction, et couvre aussi le cas d'une implantation distribuée de ces moyens, avec par exemple une partie du système fixée sur l'ouvrant et une autre partie présente ailleurs dans le local ou le bâtiment, voire constituée par un serveur web distant ou analogue.

Les moyens de traitement peuvent comporter tout circuit électronique permettant de remplir les fonctions demandées, notamment un microcontrôleur programmé à cet effet ou tout composant spécialisé.

Les moyens de traitement peuvent comporter un unique circuit électronique, notamment dans le cas où le système tout entier est porté par l'ouvrant ou lorsque le système se présente sous la forme d'un boîtier fixé à proximité, par exemple fixé sur le mur, ou intégré à un interrupteur commandant un éclairage ou un store motorisé.

En variante, les moyens de traitement sont distribués entre plusieurs circuits électroniques distants qui communiquent entre eux, notamment par une liaison filaire ou sans fil. Par exemple, les moyens de traitement comportent au moins un circuit électronique présent sur l'ouvrant ou à proximité, et au moins un autre circuit électronique situé à distance, cet autre circuit électronique faisant par exemple partie d'une installation domotique ou d'un système de gestion centralisé du bâtiment.

Le cas échéant, les moyens de traitement comportent une partie locale communiquant avec un réseau local du bâtiment, et un serveur distant avec lequel des données sont échangées, et qui réalise une partie du traitement des données.

Ainsi, le système peut comporter une passerelle permettant de récupérer des informations provenant de services web externes ou d'un système tiers comme les conditions extérieures, qu'elles soient thermiques ou de qualité de l'air.

Tout ou partie du traitement de l'information conduisant à générer la préconisation peut ainsi être effectué localement ou de façon déportée sur un serveur web ou un système extérieur tel que par exemple un système de gestion climatique centralisé du bâtiment.

### Interface utilisateur

Conformément à l'invention, le système délivre une recommandation d'ouverture ou de fermeture de l'ouvrant, quand cela est possible, ainsi le cas échéant que d'autres informations annexes.

Le système comporte ainsi un moyen pour diffuser une information à destination d'un occupant de l'espace sur lequel donne l'ouvrant. De préférence, cette information est diffusée sous une forme visuelle, mais l'invention n'exclut pas une diffusion audio, par exemple à destination d'une personne mal voyante, voire additionnellement tout autre mode de communication de l'information, par exemple tactile.

De préférence, le système comporte un afficheur ou voyant lumineux renseignant sur la préconisation d'ouverture ou de fermeture de l'ouvrant.

L'afficheur est par exemple un afficheur à cristaux liquides, rétroéclairé ou non, ou à encre électronique ou à LEDs, entre autres.

Lorsqu'au moins un voyant est utilisé, il s'agit de préférence d'une ou plusieurs LEDs ou de LED(s) multicolore(s).

Le système peut comporter un détecteur de présence ou de mouvement, et passer dans un mode actif seulement en présence d'un occupant à proximité, susceptible de voir la préconisation affichée. Le mode actif peut concerner le fonctionnement global du système, c'est-à-dire le traitement des données d'entrée en vue de déterminer la préconisation à générer, ou seulement l'affichage de la préconisation, l'afficheur devenant par exemple actif ou étant rétroéclairé lorsque l'utilisateur passe à proximité, ou le ou les voyants s'allumant seulement à ce moment.

La préconisation peut être affichée sous la forme d'un message textuel et/ou d'une icône représentant un ouvrant ouvert ou fermé ou une action d'ouverture ou de fermeture, ou d'un voyant s'allumant, avec par exemple une légende ou un pictogramme renseignant sur ce qu'indique le voyant, ou encore d'un voyant pouvant s'illuminer de plusieurs couleurs différentes en fonction de l'information à transmettre.

Par exemple, l'affichage est réalisé au moyen d'un feu tricolore intégrant :
- Un voyant vert, pour indiquer à l'usager qu'il est recommandé d'ouvrir l'ouvrant,
- un voyant rouge, pour indiquer à l'occupant qu'il est recommandé de refermer l'ouvrant,
- un voyant orange, quand deux paramètres sont en contradiction, ce qui est par exemple le cas en hiver où l'ouverture des fenêtres permet d'améliorer la qualité de l'air à l'intérieur du logement mais accentue les déperditions thermiques et donc la consommation de chauffage.

Lorsque le feu est éteint, cela peut traduire une zone d'évolution libre ou l'action de l'occupant sur l'ouvrant n'aura d'impact négatif ni sur le confort thermique et sa qualité de l'air ni sur sa consommation énergétique.

De préférence, notamment en cas de contradiction entre paramètres, par exemple l'hiver où l'ouverture des fenêtres permet d'améliorer la qualité de l'air à l'intérieur du logement mais accentue les déperditions thermiques et donc la consommation de chauffage, la préconisation fait intervenir une durée d'ouverture, par exemple afin de signaler à l'utilisateur la durée optimale d'ouverture, afin de ventiler au juste nécessaire pour évacuer les polluants, en dégradant au minimum la consommation de chauffage. L'ordre de grandeur de la durée d'ouverture préconisée peut être de l'ordre de quelques minutes, en fonction des seuils de déclenchement, de la typologie de la zone thermique et des conditions intérieures et extérieures.

Le cas échéant, un clignotement du ou des voyants peut signaler une information additionnelle, par exemple signaler un changement récent de préconisation ou précéder un changement de préconisation, ou renseigner sur une durée d'ouverture préconisée, un clignotement rapide signifiant par exemple une recommandation d'ouverture de courte durée et un clignotement lent une durée plus longue. L'affichage direct de la durée peut également être prévu.

Un bip sonore peut également être émis pour signaler par exemple un changement de préconisation, par exemple lorsque la durée d'ouverture préconisée est écoulée.

L'interface utilisateur peut afficher d'autres informations, comme les valeurs du ou des paramètres mesurés par les capteurs, par exemple la température intérieure, extérieure, la teneur en CO₂ ou autres composés, l'intensité du bruit extérieur, ...

L'interface utilisateur peut également être configurable par l'utilisateur ou par un installateur, pour lui permettre d'entrer des informations, par exemple régler des seuils et/ou sélectionner un mode de fonctionnement, par exemple hiver ou été.

L'interface utilisateur peut comporter tout clavier, écran tactile, boutons, joystick, touches sensitives, etc. permettant d'entrer une information. Le cas échéant, le système peut recevoir des données d'un appareil disposant d'une interface utilisateur et avec lequel il communique. Par exemple, le système selon l'invention peut communiquer par « Bluetooth », « ZigBee », « Z-wave » ou « Wifi » ou autrement avec un téléphone portable disposant d'une application permettant d'adresser des instructions ou données au système, ou avec une enceinte connectée pour contrôle vocal de type « Alexa » par exemple.

### Capteurs et modules de réception de données

Le système selon l'invention dispose de données d'entrée qui le renseignent sur une ou plusieurs températures dans l'environnement de l'occupant et/ou sur la qualité de l'air, notamment l'hygrométrie relative, et/ou la teneur en polluants. Le système peut également comporter un ou plusieurs capteurs renseignant sur le niveau de bruit extérieur.

Ces données peuvent provenir directement de capteurs appartenant au système, par exemple intégrés à un circuit électronique disposé dans un boîtier fixé sur l'ouvrant ou à proximité. En variante, elles proviennent de capteurs n'appartenant pas au système, mais ce dernier reçoit l'information correspondante grâce à un ou plusieurs modules de réception de données. Le système reçoit par exemple une information le renseignant sur la température intérieure d'un thermostat d'ambiance, par une liaison sans fil par exemple.

Le ou les modules de réception de données peuvent être en communication directe avec les capteurs ou avec un concentrateur, par exemple de type serveur domotique pour un bâtiment résidentiel ou avec la Gestion Technique du Bâtiment (GTB) dans le cas d'un bâtiment tertiaire, soit d'un ou plusieurs serveurs web externes.

Dans le cas où le système comporte un ou plusieurs capteurs, ces derniers peuvent être reliés par un câble électrique aux moyens de traitement ou intégrés sur une carte électronique avec d'autres composants du système. Le ou les capteurs peuvent encore communiquer par une liaison sans fil avec le reste du système.

Dans le cas où le système comporte un module de réception de données, la réception des données peut se faire par voie filaire ou sans fil. Les données peuvent provenir par exemple d'une centrale domotique ou d'un système de gestion climatique centralisée du bâtiment, ou des capteurs eux-mêmes, comme mentionné ci-dessus.

### Alimentation électrique

De préférence, le système selon l'invention est autonome sur le plan énergétique, c'est-à-dire qu'il n'a pas besoin d'une connexion à un réseau électrique pour fonctionner. Cela peut faciliter son implantation sur un ouvrant ou à proximité.

Le système peut comporter une source d'énergie électrique telle qu'au moins une cellule photovoltaïque, un convertisseur à effet Peltier, un convertisseur électromécanique de type triboélectrique ou piézoélectrique, un convertisseur électromagnétique pour convertir de l'énergie radiofréquence environnante en énergie utilisable par le système, ou une pile ou accumulateur électrique, entre autres possibilités.

Dans le cas de l'utilisation d'au moins une cellule photovoltaïque, celle-ci est par exemple disposée du côté extérieur de l'ouvrant ; dans le cas d'un convertisseur électromécanique, celui-ci est par exemple disposé de manière à être actionné lors de l'ouverture de l'ouvrant, notamment lors de la manipulation d'une poignée de l'ouvrant.

Tout ou partie du système selon l'invention peut encore être alimenté par le secteur, soit directement, soit par l'intermédiaire d'un adaptateur, ou par une source électrique servant par exemple à alimenter un dispositif d'occultation de l'ouvrant, par exemple un store motorisé ou un vitrage électro-chromique.

### Règles décisionnelles

Le système est agencé pour générer au moins une préconisation d'ouverture ou de fermeture de l'ouvrant par l'exécution d'un algorithme comportant une ou plusieurs règles décisionnelles, lesquelles peuvent faire intervenir un nombre plus ou moins grand de données d'entrée selon les cas.

Ces données d'entrée peuvent concerner des conditions intérieures et des conditions extérieures.

Les règles décisionnelles peuvent faire intervenir un hystérésis ou une temporisation avant prise en compte d'un contrordre.

### Conditions intérieures

Parmi les conditions intérieures prises en compte par le système pour générer la préconisation, il y a de préférence au moins la température intérieure, et mieux aussi au moins une grandeur représentative de la qualité de l'air intérieur, telle que par exemple la teneur en polluants tels que la teneur en CO₂, en composés organovolatiles totaux COVT, en particules, et/ou de l'humidité relative, entre autres paramètres ayant une incidence sur le confort. De préférence, le système prend en compte au moins la teneur en CO₂ de l'air intérieur, en plus de la température intérieure.

Le système peut également prendre en compte, le cas échéant, l'état allumé ou non du chauffage ou de la climatisation.

### Conditions extérieures

Parmi les conditions extérieures prises en compte par le système pour générer la préconisation, il y a de préférence au moins la température extérieure.

D'autres paramètres représentatifs de la qualité de l'air extérieur et/ou des conditions météorologiques peuvent également être pris en considération, comme l'humidité relative de l'air, une précipitation en cours, par exemple pluie, neige, grêle ou brouillard, la présence de vent au-delà d'une certaine force, ou la teneur en polluants tels que CO₂, particules fines, oxydes d'azote, ozone, ..., ou le niveau de bruit environnant.

En particulier, le système peut être agencé de telle sorte qu'il inhibe toute préconisation d'ouverture lorsque certaines conditions extérieures sont présentes, telles que la présence d'une précipitation en cours, d'un vent fort, d'un air pollué ou d'un fort niveau de bruit environnant extérieur.

Ces conditions extérieures peuvent être les conditions actuelles, le système disposant par exemple d'un ou plusieurs capteurs tels qu'un détecteur de pluie ou un anémomètre. Le système peut encore recevoir des données renseignant sur ces conditions d'une station météo équipant le bâtiment, ou d'un serveur météo. Dans ce cas, l'inhibition peut être déclenchée non seulement lorsque les conditions interdisant l'ouverture sont présentes, mais encore lorsque leur survenance est proche, par exemple dans le quart d'heure qui suit.

Le cas échéant, le système peut signaler que l'ouverture doit être de courte durée par anticipation d'une précipitation à venir.

Les règles décisionnelles appliquées peuvent être monocritères ou multicritères, étant de préférence multicritères.

L'un de ces critères peut concerner au moins une condition intérieure ou extérieure et un autre critère la présence d'un chauffage ou d'une climatisation en marche ou non, ou la saison dans l'année, en supposant que l'hiver le chauffage est souvent en marche et que l'on cherche à minimiser la consommation énergétique, et que l'été il ne l'est pas et que l'on cherche alors à se protéger d'une chaleur excessive et à garder la fraicheur dans les bâtiments.

Par exemple, les moyens de traitement peuvent être agencés pour appliquer au moins deux règles décisionnelles prédéfinies en fonction de la sélection d'un mode de fonctionnement du système parmi au moins deux modes de fonctionnement, dont un mode de fonctionnement dit « été » et un autre dit « hiver ». Dans le mode été, le système vise à aider l'occupant à optimiser son confort thermique et valoriser au mieux le potentiel de rafraichissement de la zone thermique. Dans le mode hiver, le système vise à le conseiller dans la juste ventilation pour améliorer la qualité de l'air tout en minimisant l'impact sur sa consommation énergétique. A l'inter-saison, le système peut basculer automatiquement ou être basculé manuellement dans l'un ou l'autre mode, en fonction par exemple de la météo. Lorsque la sélection est manuelle, l'utilisateur entre sur l'interface le mode de fonctionnement choisi, par exemple en déplaçant un sélecteur à deux positions dans la position choisie.

Lorsque la sélection est automatique, le système comporte par exemple une horloge qui le renseigne sur la date, ou reçoit la date par radio, ou reçoit une prévision météo et décide du mode été ou hiver à appliquer en fonction de la température extérieure prévue.

Le système peut encore basculer automatiquement entre les modes été et hiver selon que le chauffage est allumé ou non sur une fenêtre glissante, sur un nombre donné de jours précédents par exemple, en détectant par exemple de façon autonome une évolution de la température intérieure représentative de la présence d'un chauffage en marche, ou en recevant une information renseignant sur la mise en marche du chauffage.

### Estimation de la durée d'ouverture préconisée

Le système peut être agencé pour estimer une durée d'ouverture préconisée, afin de changer la préconisation affichée lorsqu'une certaine durée s'est écoulée depuis l'ouverture de l'ouvrant et/ou pour émettre à destination de l'utilisateur une information le renseignant sur la durée d'ouverture préconisée.

La durée d'ouverture préconisée peut être estimée à partir d'un apprentissage par le système de l'évolution de la température intérieure ou d'un paramètre représentatif de la qualité de l'air, par exemple la teneur en CO₂, suite à l'ouverture de l'ouvrant et d'au moins certaines conditions intérieures et/ou extérieures, comme par exemple la température intérieure ou la teneur de l'air intérieur en CO₂ au moment de l'ouverture de l'ouvrant et/ou la température extérieure.

L'apprentissage peut consister à enregistrer sur une certaine période les variations des différents paramètres après ouverture de l'ouvrant, et à calculer un modèle permettant d'estimer la durée nécessaire pour qu'un paramètre donné atteigne la valeur souhaitée en fonction de la valeur des autres paramètres au début de la période. Ce calcul permettant de définir le modèle peut être un traitement statistique. L'apprentissage peut encore être effectué par tout autre moyen adapté, à l'aide d'un réseau de neurones, par exemple.

### Exemples

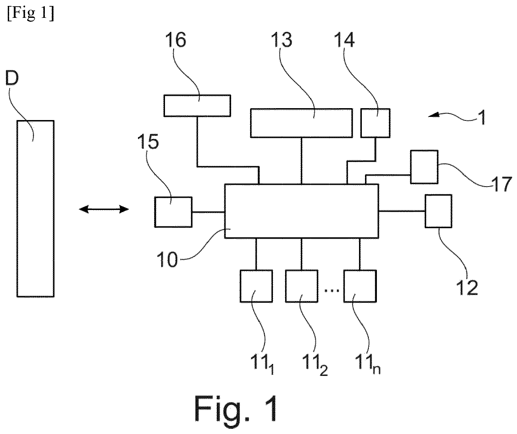

On a représenté de façon schématique à la figure 1 un exemple de système 1 selon l'invention.

Ce système comporte une unité de traitement 10, par exemple un microcontrôleur, une alimentation électrique 12, par exemple comportant un accumulateur et une ou plusieurs cellule(s) photovoltaïques pour recharger cet accumulateur, des moyens d'affichage 13, par exemple un afficheur et/ou un ou plusieurs voyants, et des moyens de saisie 14, par exemple un écran tactile et/ou une ou plusieurs touches ou sélecteurs.

Dans l'exemple considéré le système comporte un ensemble de capteurs 11₁, ... 11ₙ, de conditions intérieures et/ou extérieures, étant entendu que le système peut aussi recevoir les données correspondantes depuis un autre système avec lequel il peut communiquer, comme expliqué plus haut.

Le système 1 peut comporter un détecteur de présence 16, par exemple capacitif ou à capteur de type PIR ou autre, capable de signaler à l'unité de traitement 10 la présence d'une personne dans le voisinage des moyens d'affichage 13.

Au moins un module de communication sans fil 15 peut compléter le système, permettant de recevoir ou d'échanger des données avec au moins un système extérieur D, directement ou via par exemple un routeur d'un réseau WAN ou WLAN. Ce système extérieur est par exemple un capteur d'au moins une condition intérieure ou extérieure, ou un système plus complexe tel qu'un système de gestion climatique centralisé, une installation domotique, un thermostat intelligent, ou un appareil de chauffage ou de refroidissement tel qu'une chaudière, un climatiseur ou une pompe à chaleur, ou un serveur externe, notamment un serveur web, entre autres possibilités.

Le système 1 peut également comporter, le cas échéant, un détecteur 17 d'ouverture de l'ouvrant, permettant de connaître l'instant où l'ouvrant est ouvert par l'occupant, notamment après l'affichage d'une préconisation d'ouverture. Cette connaissance est utile lorsqu'une durée d'ouverture est préconisée ou lorsque le système change la préconisation affichée au bout d'un certain temps après l'ouverture. Ce détecteur 17 comporte par exemple un aimant fixé sur l'un du vantail ou du dormant, et un capteur magnétique, par exemple à lame aimantée, fixé sur l'autre. En variante, la détection s'effectue au niveau de la poignée, son actionnement modifiant par exemple l'état d'un contact. Le cas échéant, le contact est également utilisé dans le cadre d'une alarme antiintrusion.

Le système 1 comporte par exemple un unique boîtier logeant tous les composants du système ou seulement une partie d'entre eux.

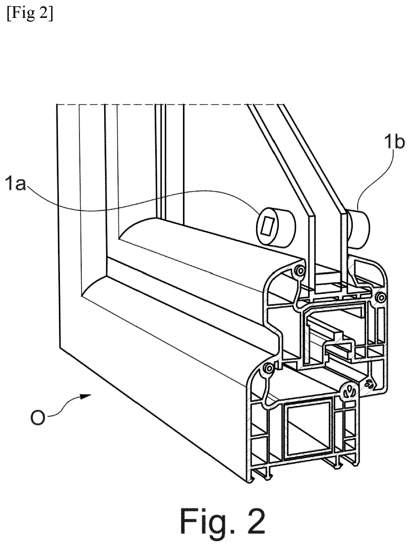

A titre d'exemple, on a représenté à la figure 2 un système en deux parties la, 1b, disposées respectivement sur les côtés intérieur et extérieur du vantail de l'ouvrant O.

Chacune des parties 1a et 1b se présente par exemple sous la forme d'un boîtier collé par une face sur le vitrage de l'ouvrant ou en variante sur la menuiserie de l'ouvrant.

La partie intérieure la comporte par exemple les moyens d'affichage, un ou plusieurs capteurs dont au moins un capteur de la température de l'air ambiant, l'unité de traitement et un accumulateur électrique, ainsi le cas échant qu'un module de communication sans fil.

La partie extérieure 1b comporte par exemple un ou plusieurs capteurs dont au moins un capteur de la température de l'air ambiant, et une ou plusieurs cellules photovoltaïques, ainsi le cas échéant qu'un module de communication sans fil.

Ces deux parties peuvent être reliées par un câble (non apparent) ou en variante comporter chacune une alimentation électrique et échanger par une liaison sans fil. Les deux parties peuvent encore échanger de l'énergie entre elles par induction.

Bien entendu, l'exemple illustré à la figure 2 n'est qu'un exemple parmi d'autres de possibilités de montage du système sur l'ouvrant, et de nombreuses variantes sont possibles.

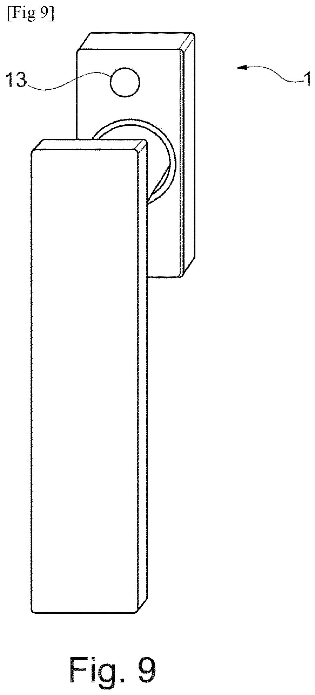

A titre d'exemple, on a représenté à la figure 9 une variante de système sous forme de poignée pouvant remplacer une poignée d'un ouvrant existant. Le moyen d'affichage se présente par exemple sous la forme d'un voyant 13 disposé sur la plaque intérieure de la poignée.

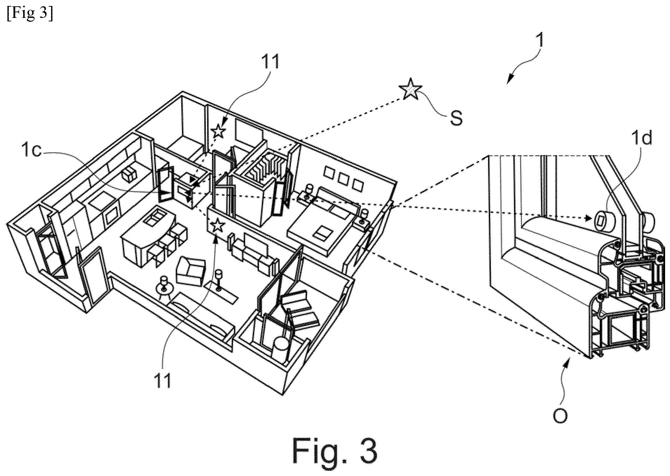

On a illustré à la figure 3 la possibilité pour le système 1 de comporter une partie dite d'affichage local 1d, fixée sur l'ouvrant, comportant un moyen d'affichage, un module de communication et une source d'énergie électrique, et une autre partie dite « maître », comportant un contrôleur centralisé 1c, située à distance de l'ouvrant.

Le contrôleur centralisé communique par exemple par une liaison sans fil avec un ou plusieurs capteurs d'ambiance 11, renseignant par exemple sur la température intérieure et/ou la teneur en polluant(s) intérieur(s), notamment en CO₂.

Dans l'exemple illustré, on n'a représenté qu'une seule partie d'affichage local 1d équipant un ouvrant, mais plusieurs ouvrants peuvent être chacun équipés, voire tous les ouvrants le sont.

L'information affichée par la ou chaque partie d'affichage local 1d est dans cet exemple contrôlée par le contrôleur centralisé, qui détermine pour elle ou chacune d'elles la ou les préconisations à afficher en fonction des données reçues du ou des capteurs d'ambiance 11, et de données renseignant sur les conditions extérieures, le cas échéant. Ces données peuvent être fournies par un ou plusieurs capteurs des conditions extérieures ou par un serveur web auquel le contrôleur 1c peut se connecter.

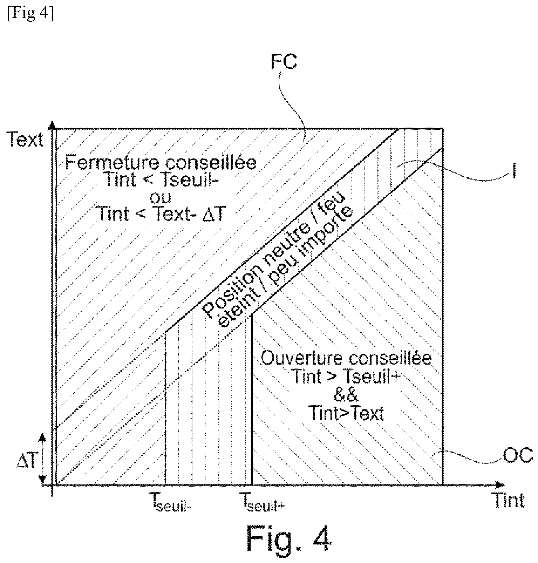

Sur les figures 4 à 8, on a illustré quelques exemples d'applications de règles décisionnelles permettant de générer une préconisation d'ouverture ou de fermeture.

Dans l'exemple de la figure 4, on suppose que les seules données d'entrée sont la température intérieure Tᵢₙₜ et la température extérieure Tₑₓₜ, provenant de capteurs propres au système et/ou de mesures effectuées par des capteurs externes et communiquées au système, et que l'objectif est de rafraîchir.

Dans cet exemple, la préconisation est monocritère température, et le système 1 génère une préconisation d'ouverture ou de fermeture de l'ouvrant en fonction de ces données Tᵢₙₜ et Tₑₓₜ et de seuils bas et haut de température Tₛₑᵤᵢₗ₋ et Tₛₑᵤᵢₗ₊ qui peuvent être prédéfinis ou réglables par l'utilisateur, en fonction de la zone de confort thermique qu'il souhaite.

La préconisation qui est générée prend dans cet exemple trois états, à savoir « Fermeture Conseillée » (FC), « Indifférent » (I) et « Ouverture Conseillée » (OC), le système 1 étant destiné à être utilisé ici en été.

Chaque état FC, I ou OC est par exemple signalé par l'allumage ou non d'un voyant, et la couleur d'allumage de celui-ci, l'allumage en rouge signifiant par exemple FC, l'allumage en vert OC et l'extinction I.

L'état FC correspond au respect de l'une au moins des deux conditions Tᵢₙₜ<Tₛₑᵤᵢₗ₋ et Tᵢₙₜ<Tₑₓₜ - deltaT,
où deltaT est une grandeur prédéfinie, deltaT étant par exemple égal à 0,5°C ou plus, par exemple 1°C ou plus, voire 2°C ou plus. Ce seuil deltaT est par exemple pré-réglé, ou peut être ajusté par l'utilisateur ou l'installateur.

Par ailleurs, de façon générale, chaque préconisation fait de préférence intervenir un hystérésis ou une temporisation avant contrordre, pour éviter que la valeur de la préconisation ne varie de manière intempestive (par exemple Tᵢₙₜ qui oscille autour de Tₛₑᵤᵢₗ₋ et Tᵢₙₜ et Tₑₓₜ proches l'une de l'autre).

Autrement dit, le système 1 conseille dans cet exemple de fermer l'ouvrant ou de le garder fermé lorsque soit la température intérieure Tᵢₙₜ est déjà fraîche (car inférieure à Tₛₑᵤᵢₗ₋), soit que compte-tenu de l'écart de température avec l'extérieur, l'ouverture entraînerait un réchauffement significatif, car l'air extérieur est significativement plus chaud que l'air intérieur.

A contrario, l'état OC correspond au respect cumulé des deux conditions Tᵢₙₜ>Tₛₑᵤᵢₗ₊ et Tᵢₙₜ>Tₑₓₜ, c'est-à-dire que le système conseille d'ouvrir l'ouvrant pour aérer lorsque à la fois la température de l'air extérieur est capable de rafraîchir car plus faible que celle de l'air intérieur, et qu'un besoin de rafraîchissement existe du fait de la température de l'air intérieur, supérieure à Tₛₑᵤᵢₗ₊ (ce besoin ou non de rafraîchissement pouvant être ajusté en jouant sur la valeur du seuil haut Tₛₑᵤᵢₗ₊).

Lorsque les conditions correspondant aux états FC ou OC ne sont pas remplies, le système reste neutre et ne génère aucune préconisation, ce qui est matérialisé par l'état I.

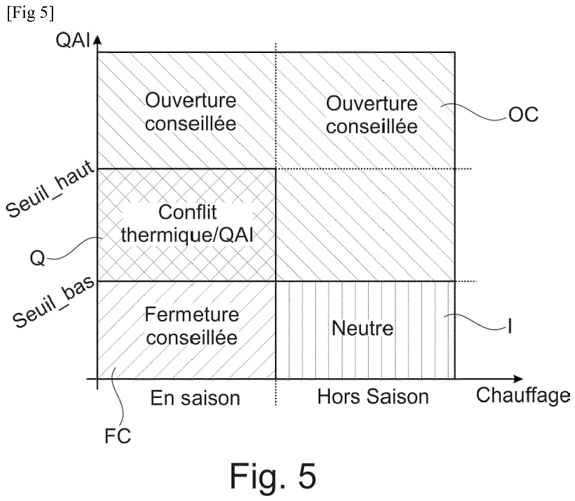

Dans l'exemple de la figure 5, la préconisation est multicritère Qualité de l'Air Intérieur (QAI) et chauffage en route (en saison) ou à l'arrêt (hors saison), et le système 1 génère une préconisation d'ouverture ou de fermeture qui tient compte de l'arrêt ou non du chauffage et de la qualité de l'air intérieur. Le système conseille ici l'occupant sur l'ouverture ou la fermeture de l'ouvrant en fonction de la qualité de l'air intérieur de façon à minimiser la dépense énergétique.

La qualité de l'air correspond par exemple à une teneur de l'air intérieur en un polluant tel que le CO₂, mesurée par un capteur du système ou connue du système autrement.

Les moyens d'affichage du système peuvent signaler dans cet exemple trois états comme précédemment, à savoir OC, FC, I et un quatrième état conflictuel Q dit « y a débat », qui correspond au fait qu'il n'y pas de préconisation pouvant être émise par le système, car si la qualité de l'air a dépassé un seuil bas qui rend utile d'ouvrir pour aérer, la qualité de l'air n'est pour autant pas mauvaise au point de l'imposer, et inversement si la qualité de l'air n'est pas si mauvaise car sous le seuil haut, la qualité de l'air n'est pas pour autant bonne au point qu'un renouvellement de l'air est inutile. Le cas échéant, comme expliqué plus loin, le système peut être configurable par l'utilisateur ou l'installateur pour privilégier dans cette situation une préconisation visant à privilégier la qualité de l'air ou les économies d'énergie, auquel cas une préconisation allant en ce sens peut être générée au lieu de l'affichage d'un état conflictuel.

Dans l'exemple de la figure 5, en saison, c'est-à-dire que le chauffage est en marche et susceptible de s'allumer, si la qualité de l'air est bonne (teneur en polluant inférieure à Seuil_bas) la fermeture de l'ouvrant est conseillée pour éviter une éventuelle déperdition énergétique, si la qualité de l'air est mauvaise (teneur supérieure à Seuil_haut) l'ouverture est préconisée, même si cela entraîne une augmentation de la consommation énergétique, et la situation intermédiaire est signalée par l'état Q, puisque l'ouverture ne serait pas neutre sur le plan énergétique. Dans le cas où la qualité de l'air est bonne, il peut néanmoins être préconisé dans une variante d'ouvrir l'ouvrant si l'on se situe dans les heures les plus chaudes de la journée, le système pouvant connaître l'heure et être informé de la météo dans ce cas. Le fait que l'ouvrant laisse entrer ou non le soleil peut être paramétré à l'installation ou appris grâce par exemple à une cellule photovoltaïque.

Hors saison, la situation est plus simple, puisqu'il n'y a plus de considération énergétique et la préconisation est générée uniquement sur la base du franchissement ou non du seuil bas, pour la qualité de l'air, l'ouverture étant préconisée dès que la teneur dépasse Seuil_bas, et l'état I étant indiqué lorsque la teneur est inférieure à ce seuil, pour traduire le fait que la qualité de l'air est déjà bonne et qu'une aération ne s'impose pas.

Dans l'exemple de la figure 5, le système est par exemple renseigné sur le fait qu'il est en saison ou hors saison par l'état d'un sélecteur du système actionné manuellement par l'occupant, ou par le chauffage lui-même, cette information étant par exemple récupérée par le système automatiquement, par le fait que le chauffage et le système sont tous les deux connectés à un réseau local WAN par Wifi par exemple, ou communiquent entre eux par une liaison RF, ou autrement par exemple via une connexion de type internet des objets à bas débit, de type LoRaWAN ou similaire. Le système peut encore reconnaître que le chauffage est allumé, en détectant des variations de la température intérieure typiques d'un chauffage allumé.

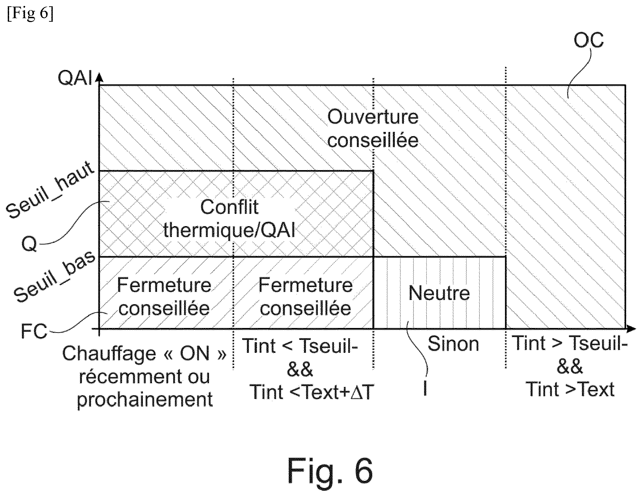

Dans l'exemple de la figure 6, le système génère des préconisations en fonction à la fois de la température intérieure, de la température extérieure, de la qualité de l'air et de l'état du chauffage.

Dans le cas du mode saison, c'est-à-dire d'un chauffage en marche (contrôlé par un thermostat pour maintenir une température de consigne) ou sur le point d'être mis en marche, par exemple dans l'heure qui suit ou dans la journée, la préconisation qui est générée par le système dépend uniquement de la qualité de l'air, l'état FC correspondant à une teneur faible en polluant (inférieure à Seuil_bas), OC à une teneur élevée (teneur supérieure à Seuil_haut), et Q à une teneur intermédiaire.

Dans les autres cas, en l'absence de chauffage, le système génère une préconisation visant à conserver la fraîcheur de l'environnement intérieur.

Lorsqu'il est satisfait à la condition Tᵢₙₜ<Tₛₑᵤᵢₗ₋, c'est-à-dire qu'il fait déjà frais à l'intérieur, et que l'écart de température avec l'extérieur fait que l'ouverture de l'ouvrant entraînerait un réchauffement significatif, ce qui est traduit par la condition supplémentaire Tᵢₙₜ<Tₑₓₜ-deltaT, alors l'ouverture n'est préconisée que si la qualité de l'air intérieur est mauvaise (teneur en polluant supérieure à Seuil-haut). Si la qualité de l'air intérieur est bonne (teneur inférieure à Seuil_bas) la fermeture est préconisée. Lorsque la teneur est comprise entre les seuils bas et haut, il est indiqué qu'aucune préconisation d'ouverture ou de fermeture ne peut être générée. En variante, le système prend en compte un facteur « préférence utilisateur », et génère une recommandation en privilégiant par exemple une préférence « qualité de l'air intérieur » ou une préférence « performance énergétique ».

Dans le cas où la température intérieure est estimée excessive pour un confort thermique optimal, ce qui correspond à la condition Tᵢₙₜ>Tₛₑᵤᵢₗ₊, et que la température extérieure est telle qu'une aération apporterait un rafraîchissement, ce qui correspond à la condition supplémentaire Tᵢₙₜ>Tₑₓₜ, alors l'ouverture est préconisée.

Dans les autres situations, ce qui est indiqué par « sinon » sur la figure 6, c'est-à-dire lorsque l'ouverture ou la fermeture n'a pas vraiment d'incidence sur le plan du confort thermique, alors l'ouverture est préconisée dès que la teneur en polluant franchit à la hausse le seuil bas, et le système indique autrement que l'ouverture ou la fermeture est sensiblement neutre sur la qualité de l'air ou le confort thermique (état I).

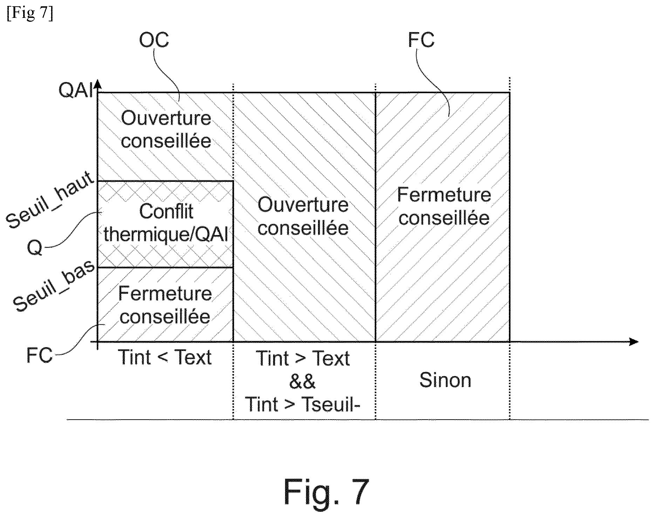

L'exemple de la figure 7 correspond à un système agencé pour générer une préconisation dans la situation d'un local climatisé, en fonction de la qualité de l'air, avec l'objectif de limiter la consommation énergétique liée à la climatisation.

S'il fait plus frais à l'intérieur qu'à l'extérieur, ce qui est traduit par Tᵢₙₜ<Tₑₓₜ, alors le système préconisera une ouverture de l'ouvrant en signalant l'état OC, seulement si la qualité de l'air est mauvaise, c'est-à-dire si la teneur en polluant est supérieure à Seuil_haut.

Si la qualité de l'air est bonne, c'est-à-dire la teneur en polluant inférieure à Seuil_bas, alors le système préconisera la fermeture de l'ouvrant en signalant l'état FC. Dans la situation où la qualité de l'air est intermédiaire, c'est-à-dire que la teneur en polluant est comprise entre les seuils haut et bas, le système indiquera qu'il ne peut effectuer de préconisation, et signalera l'état Q.

Lorsque la température intérieure est supérieure à la température extérieure, c'est-à-dire qu'il fait plus frais dehors, et qu'il fait quand même suffisamment chaud à l'intérieur, ce qui se traduit par Tᵢₙₜ>Tₛₑᵤᵢₗ₋, alors le système préconise l'ouverture de l'ouvrant quelle que soit la qualité de l'air intérieur.

Dans les autres cas, le système préconise la fermeture de l'ouvrant.

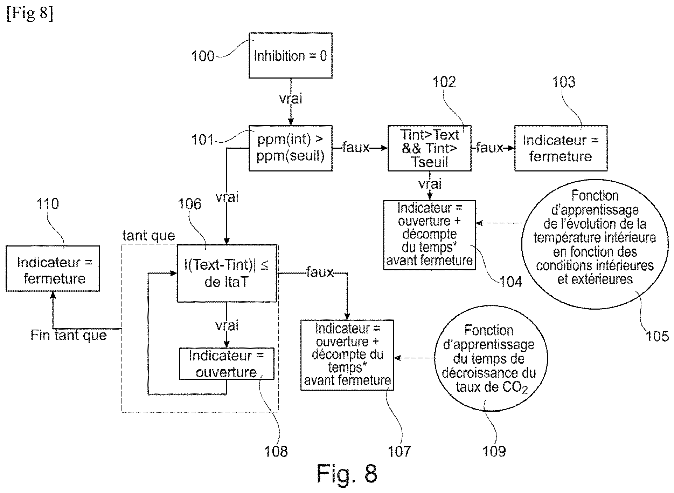

On va maintenant décrire en référence à la figure 8 le fonctionnement du système 1 dans le cas d'une variante plus complexe, multicritère, où peuvent intervenir de nombreux paramètres d'entrée tels que la température intérieure, la température extérieure et la teneur en polluant intérieur, par exemple la teneur en CO₂.

Tout d'abord, le système détermine à l'étape 100 si des conditions d'inhibition existent qui feraient que le système 1 ne doit délivrer aucune préconisation d'ouverture.

Par exemple, le système 1 comporte un capteur de pluie, de vent, de niveau de pollution extérieure ou de niveau de bruit extérieur, par exemple un capteur de pollution extérieure en particules fines et/ou teneur en oxydes d'azote, ou reçoit l'information correspondante d'une autre source, et en cas de pluie, de vent fort, de niveau de pollution extérieure trop élevé ou de bruit extérieur trop important, aucune préconisation d'ouverture n'est délivrée.

Ensuite, le système détermine à l'étape 101 si le niveau de polluant de l'air intérieur ppm(int) est supérieur à un seuil prédéfini ppm(seuil).

Dans la négative, le système détermine à l'étape 102 si la température intérieure Tint est supérieure à la température extérieure Tₑₓₜ et si la température intérieure est supérieure à un seuil de confort Tₛₑᵤᵢₗ, auquel cas le système émet à l'étape 104 une préconisation d'ouverture. Ce seuil peut être défini par l'utilisateur ou un installateur du système.

Cette préconisation peut être accompagnée d'un décompte du temps avant préconisation de la fermeture de l'ouvrant. Dans ce cas, le système comporte un capteur qui l'informe de l'action d'ouverture de l'ouvrant, de façon à faire démarrer ce décompte à l'ouverture de l'ouvrant.

Une fois la durée d'ouverture préconisée écoulée, le système peut éventuellement signaler le changement de préconisation par l'émission d'un signal sonore et préconiser la fermeture de l'ouvrant.

La durée d'ouverture préconisée peut être déterminée par une fonction 105 d'apprentissage de l'évolution de la température intérieure en fonction des conditions intérieure et extérieure lorsque l'ouvrant est ouvert. Cet apprentissage est par exemple effectué sur une certaine période, automatiquement, en relevant les évolutions de la température suite à l'ouverture de l'ouvrant, puis en effectuant un traitement statistique pour calculer une fonction donnant cette évolution en fonction des différents paramètres, ou à l'aide d'un réseau de neurones.

La durée préconisée correspond par exemple à la durée estimée pour que la température intérieure atteigne une valeur prédéfinie.

Si à l'étape 102 les conditions Tᵢₙₜ>Tₑₓₜ et Tᵢₙₜ>Tₛₑᵤᵢₗ ne sont pas remplies, le système émet une préconisation de fermeture 103.

Dans le cas du test effectué à l'étape 101, si l'air intérieur est pollué, ce qui correspond à ppm(int)>ppm(seuil), alors le système détermine à l'étape 106 si un écart de température supérieur à un seuil deltaT existe entre les températures intérieure Tᵢₙₜ et extérieure Tₑₓₜ. Le seuil deltaT peut être réglé par l'utilisateur ou l'installateur du système.

Si l'écart excède deltaT, cela signifie que l'ouverture de l'ouvrant impactera la température de l'air intérieur, et que la préconisation d'ouverture 107 doit être assortie d'un décompte de la durée d'ouverture avant changement de préconisation, et émission d'une préconisation de fermeture 110. Ce changement de préconisation peut être signalé par l'émission d'un signal sonore par exemple.

Pour cela, le système est averti du moment où l'ouvrant est ouvert, par un capteur d'ouverture par exemple, et comporte une fonction 109 d'apprentissage de la décroissance du taux de polluant dans l'air intérieur en fonction du temps écoulé après l'ouverture de l'ouvrant, le but étant de minimiser le temps d'ouverture de l'ouvrant pour limiter la variation de la température de l'air intérieur.

Si à l'étape 106 l'écart entre les températures Tint et Text est inférieur à deltaT, alors l'ouverture de l'ouvrant n'impactera pas trop fortement la température de l'air intérieur, et une préconisation d'ouverture 108 peut être générée, tant que cette condition est satisfaite.

Bien entendu, de nombreuses modifications peuvent être apportées à la mise en œuvre de l'invention sans sortir de son cadre.

Par exemple, on peut ajouter au système une fonctionnalité d'alarme antiintrusion, lorsque la partie fixée sur l'ouvrant dispose d'un détecteur d'ouverture, ou en exploitant le signal délivré par le capteur de présence lorsque celui-ci est présent, ou encore profiter de la présence du système sur l'ouvrant et de la présence d'un module de communication pour y relier un capteur de bris de glace, de chocs ou d'ouverture, et transmettre l'information correspondante à une centrale d'alarme ou à un système de gestion centralisé. Le système selon l'invention peut encore être intégré à un détecteur d'ouverture d'ouvrant d'un système d'alarme, le cas échéant, en profitant de la présence du boîtier du capteur fixé sur l'ouvrant, du capteur d'ouverture, d'une source d'énergie électrique, d'un voyant d'état et d'un module de communication radiofréquence, déjà présents au sein du détecteur, pour y adjoindre une fonctionnalité de préconisation d'ouverture ou de fermeture de l'ouvrant.

Dans des variantes, on peut prévoir que le système permette à l'utilisateur de sélectionner s'il souhaite privilégier une action visant à améliorer la qualité de l'air ou à renforcer l'économie d'énergie, dans les situations conflictuelles des exemples donnés plus haut où aucune préconisation d'ouverture ou de fermeture n'est donnée, correspondant à l'état Q « y a débat ». Dans ce cas, le système dispose par exemple d'un sélecteur manuel à trois états, l'un pour forcer l'affichage d'une préconisation d'ouverture dans ce cas, l'autre pour forcer l'affichage d'une préconisation de fermeture, et le troisième pour ne faire aucune préconisation et signaler que les deux entrent en conflit, par exemple par l'affichage d'une troisième couleur comme dans les exemples des figures 5 et 6.

## Revendications

1. Procédé pour générer une préconisation d'ouverture ou de fermeture d'un ouvrant (O) permettant à un espace d'un bâtiment d'échanger avec l'extérieur, afin d'informer un occupant de cet espace sur l'opportunité d'actionner l'ouvrant en vue d'améliorer au moins son confort thermique et/ou la qualité de l'air dans ledit espace, procédé dans lequel :
- A partir de la connaissance d'au moins une condition d'ambiance intérieure dudit espace, dont la température intérieure et un paramètre représentatif de la qualité de l'air dans ledit espace, et le cas échéant de la connaissance en outre d'au moins une condition extérieure, on génère automatiquement une préconisation d'ouverture et/ou de fermeture de l'ouvrant par application d'au moins une règle décisionnelle prédéfinie faisant intervenir au moins ladite température intérieure et ledit paramètre, et le cas échéant ladite au moins une condition extérieure,
- on émet au moins un message visuel et/ou sonore pour informer l'occupant de ladite préconisation, ce message étant, dans le cas d'un message visuel, émis par affichage sur une interface située sur l'ouvrant ou à proximité de celui-ci,
- la préconisation étant signalée sous une forme choisie parmi au moins trois, à savoir une première forme d'affichage correspondant à une ouverture conseillée, une deuxième forme d'affichage correspondant à une fermeture conseillée et une troisième forme d'affichage correspondant à une absence de préconisation car l'ouverture n'a pas d'impact significatif positif ou négatif ou correspondant à une situation conflictuelle, mieux au moins quatre formes d'affichage, à savoir une première forme d'affichage correspondant à une ouverture conseillée, une deuxième forme d'affichage correspondant à une fermeture conseillée, une troisième forme d'affichage correspondant à une absence de préconisation car l'ouverture n'a aucun impact positif ou négatif, et une quatrième forme d'affichage correspondant à une situation conflictuelle, l'impact positif ou négatif étant un impact sur le plan thermique et la situation conflictuelle étant une situation dans laquelle il y a un impact positif thermique au détriment de la qualité de l'air ou inversement.

2. Procédé selon la revendication précédente, dans lequel on applique au moins deux règles décisionnelles prédéfinies en fonction de la sélection d'un mode de fonctionnement du système parmi au moins deux modes de fonctionnement, dont des modes de fonctionnement dits « été » et « hiver », et dans lequel de préférence on permet à l'utilisateur de sélectionner manuellement le mode de fonctionnement « été » ou « hiver ».

3. Procédé selon l'une des revendications précédentes, dans lequel la préconisation est générée sur la base d'au moins une règle décisionnelle faisant intervenir la température extérieure et la température intérieure, ladite au moins une règle décisionnelle faisant intervenir la température extérieure et la température intérieure comportant de préférence la comparaison de la différence des températures extérieure et intérieure, notamment en valeur absolue, à au moins un seuil prédéfini, ladite au moins une règle décisionnelle faisant intervenir la température extérieure comportant de préférence la comparaison de la température intérieure à la température extérieure et la comparaison de la température intérieure à un seuil de température prédéfini Tₛₑᵤᵢₗ.

4. Procédé selon l'une quelconque des revendications précédentes, la préconisation étant générée sur la base d'au moins une règle décisionnelle faisant intervenir un paramètre représentatif de la qualité de l'air intérieur, notamment choisi parmi la teneur en CO₂, l'hygrométrie relative et la teneur en polluants organovolatiles.

5. Procédé selon l'une quelconque des revendications précédentes, dans lequel on détermine une durée préconisée d'ouverture et l'on informe l'utilisateur de cette durée ou lorsque cette durée s'est écoulée après l'ouverture de l'ouvrant, cette ouverture étant de préférence détectée à l'aide d'un capteur d'ouverture (17) disposé sur l'ouvrant, ladite durée préconisée d'ouverture étant de préférence générée par application d'un modèle relatif à l'évolution d'au moins une condition d'ambiance intérieure dans ledit espace, en réponse à l'ouverture de l'ouvrant, notamment l'un au moins de la température intérieure, de la teneur en CO₂, de l'humidité relative de l'air ou de la teneur en polluants organovolatiles, ledit modèle étant de préférence déterminé par apprentissage.

6. Procédé selon l'une quelconque des revendications précédentes, dans lequel on détecte la présence ou le mouvement d'une personne à proximité de l'ouvrant, et l'on active l'affichage de la préconisation en réponse à cette détection.

7. Procédé selon la revendication l'une quelconque des revendications précédentes, dans lequel dans le cas où une situation conflictuelle est détectée, notamment dans le cas où une préconisation d'ouverture de l'ouvrant aurait un impact négatif sur le plan thermique pour l'espace intérieur, ou dans le cas où une préconisation de fermeture de l'ouvrant aurait un impact négatif sur la qualité de l'air, une préconisation correspondant à une préférence utilisateur pré-renseignée est générée.

8. Procédé selon l'une quelconque des revendications précédentes, la préconisation étant générée par un algorithme exécuté exclusivement par un système localisé sur l'ouvrant ou à proximité, ou la préconisation étant générée par un algorithme exécuté au moins partiellement ailleurs que dans un système disposé sur l'ouvrant ou à proximité.

9. Procédé selon l'une quelconque des revendications précédentes, au moins une desdites conditions d'ambiance intérieures et/ou extérieures étant mesurée par au moins un capteur disposé sur l'ouvrant ou à proximité.

10. Procédé selon l'une quelconque des revendications précédentes, au moins une desdites conditions intérieures et/ou extérieures étant mesurée par au moins un capteur distant, non disposé sur l'ouvrant ou à proximité.

11. Procédé selon l'une quelconque des revendications précédentes, la préconisation étant générée sur la base de la connaissance d'au moins une condition extérieure, notamment la température extérieure, la teneur en un polluant dans l'air extérieur, notamment en particules fines, en CO₂, en oxydes d'azote ou en ozone.

12. Procédé selon l'une quelconque des revendications précédentes, toute préconisation d'ouverture étant inhibée en cas de détection de précipitation, de vent fort, de pollution importante de l'air extérieur et/ou de niveau de bruit environnant trop élevé.

13. Procédé selon l'une quelconque des revendications précédentes, ladite au moins une règle décisionnelle faisant intervenir un hystérésis sur la ou les valeurs de seuil ou une temporisation pour l'application d'un délai avant prise en compte d'un contrordre.

14. Système (1) destiné à équiper un ouvrant (O) permettant à un espace d'un bâtiment de communiquer avec l'extérieur, ou à être placé à proximité de cet ouvrant, et visant à informer un occupant sur l'opportunité d'actionner l'ouvrant en vue d'améliorer au moins son confort thermique et/ou la qualité de l'air dans ledit espace, le système comportant
- des moyens de traitement (10),
- une interface utilisateur (13) comportant un dispositif d'affichage et/ou d'émission d'un message sonore,
- au moins
∘ un capteur de température intérieure Tᵢₙₜ dudit espace et/ou un module de réception de données renseignant sur cette température intérieure, et
∘ un capteur d'au moins un paramètre représentatif de la qualité de l'air dans ledit espace et/ou un module de réception de données renseignant sur la valeur dudit paramètre,
les moyens de traitement étant agencés pour générer une préconisation d'ouverture et/ou de fermeture de l'ouvrant en appliquant au moins une règle décisionnelle prédéfinie faisant intervenir au moins ladite température intérieure et ledit paramètre, et pour informer l'occupant, via l'affichage sur l'interface, de cette préconisation, et/ou via l'émission d'un message sonore,
la préconisation étant signalée sous une forme choisie parmi au moins trois, à savoir une première forme d'affichage correspondant à une ouverture conseillée, une deuxième forme d'affichage correspondant à une fermeture conseillée et une troisième forme d'affichage correspondant à une absence de préconisation car l'ouverture n'a pas d'impact significatif positif ou négatif ou correspondant à une situation conflictuelle, mieux au moins quatre formes d'affichage, à savoir une première forme d'affichage correspondant à une ouverture conseillée, une deuxième forme d'affichage correspondant à une fermeture conseillée, une troisième forme d'affichage correspondant à une absence de préconisation car l'ouverture n'a aucun impact positif ou négatif, et une quatrième forme d'affichage correspondant à une situation conflictuelle,
l'impact positif ou négatif étant un impact sur le plan thermique et la situation conflictuelle étant une situation dans laquelle il y a un impact positif thermique au détriment de la qualité de l'air ou inversement,
le système comportant de préférence un détecteur de présence (16), et le système et/ou l'affichage étant activés automatiquement au moins une fois dans une période de temps donnée, en réponse à la détection d'une présence,
le système comportant de préférence une alimentation électrique autonome (12), notamment au moins une cellule photovoltaïque, un convertisseur électromécanique actionné lors de l'ouverture et/ou de la fermeture de l'ouvrant par l'ouvrant ou un convertisseur à effet Peltier,
l'interface (13) comportant de préférence un feu multicolore et/ou un afficheur pour afficher un ou plusieurs pictogrammes représentant un ouvrant ouvert ou fermé ou une action de fermeture ou d'ouverture de l'ouvrant,
le système comportant de préférence un capteur (17) de détection d'ouverture de l'ouvrant,
de préférence, le système comportant un boîtier logeant l'interface utilisateur et/ou les moyens de traitement, pourvu de moyens de fixation sur l'ouvrant, notamment d'un adhésif double face et/ou de passages de vis, ou le système comportant une partie (la) à fixer du côté intérieur de l'ouvrant et une partie (1b) à fixer du côté extérieur, cette dernière comportant au moins un capteur de température extérieure et/ou au moins une cellule photovoltaïque.

15. Ensemble comportant un ouvrant (O) et un système (1) selon la revendication 14, fixé au moins en partie sur l'ouvrant, notamment comportant une surface adhésive collée sur l'ouvrant, ou étant au moins partiellement intégré à l'ouvrant, ou fixé à proximité.
